# EUROPÄISCHE PATENTANMELDUNG

(11) **EP 1 250 977 A1**
(43) Veröffentlichungstag der Anmeldung: **23.10.2002**
(21) Anmeldenummer: 02008455.4
(22) Anmeldetag: 13.04.2002
(51) Int. Cl.: B23Q 3/08, B25J 19/00

(54) **Mediendurchführeinrichtung und Schwenkeinheit**

(30) Priorität: 20.04.2001 DE 10119356
(71) Anmelder: Schunk GmbH & Co KG Fabrik für Spann- und Greifwerkzeuge, 74348 Lauffen (DE); HYGRAMA AG, 6300 Zug (CH)
(72) Erfinder: Winkler, Ralf, 74226 Nordheim (DE); Schaible, Ulrich, 70794 Filderstadt (DE)
(74) Vertreter: Dreiss, Fuhlendorf, Steimle & Becker

(57) **Zusammenfassung**

Die Erfindung betrifft eine Mediendurchführeinrichtung (16) für eine Schwenkeinheit (50) mit einer eine Welle (52) umfassenden Drehdurchführeinrichtung (14) für fluide Medien und mit einem die Welle (52) verschwenkbar aufnehmenden Gehäuseteil (12), wobei die Mediendurchführeinrichtung (16) Medienkanäle (60,62,64,66) aufweist, deren einen Enden zur Kommunikation mit in der Welle (52) verlaufenden Medienkanälen vorgesehen sind.

Die Erfindung kennzeichnet sich dadurch, dass die Mediendurchführeinrichtung (16) wenigstens ein Ventil (68), Druckleitungen (86) und einen Fluidanschluss (72) umfasst, wobei die anderen Enden der Medienkanäle der Mediendurchführeinrichtung (16) über das wenigstens eine Ventil (68) und die Druckleitungen (86) mit dem Fluidanschluss (72) verbindbar sind und dass Mittel (78) zur Steuerung und/oder Regelung des wenigstens einen Ventils (68) vorgesehen sind.

## Beschreibung

Die Erfindung geht aus von einer bekannten Mediendurchführeinrichtung für eine Schwenkeinheit, wobei die Schwenkeinheit eine eine Welle umfassende Drehdurchführeinrichtung für fluide Medien und ein die Welle verschwenkbar aufnehmendes Gehäuseteil umfasst. Die Mediendurchführeinrichtung ist an dem Gehäuseteil drehfest anordenbar und weist Medienkanäle auf, deren einen Enden mit in der Welle verlaufenden Medienkanälen kommunizieren und deren anderen Enden Kanalöffnungen zum Anschluss an verschiedene Fluidanschlüsse aufweisen. Je nach Anzahl der mit über die Schwenkeinheit zu bewegenden Effektoren wie beispielsweise Greifsysteme, sind bei dem bekannten Stand der Technik entsprechend viele Kanalöffnungen an der Mediendurchführeinrichtung vorgesehen. Regelmäßig benötigt ein Effektor zur Durchführung einer Vor- und Rückbewegung jeweils ein Medienkanalpaar, d.h. bei zwei Effektoren sind vier Kanalöffnungen, bei vier Effektoren sind acht Kanalöffnungen usw. vorzusehen.

Die Anbindung der entsprechenden Anzahl von Kanalöffnungen an einen Fluidspeicher hat sich als sehr aufwendig erwiesen. Für eine Schwenkeinheit mit beispielsweise vier Effektoren ist ein Leitungsaufwand von wenigstens acht Leitungen zu dem entsprechenden Fluidspeicher erforderlich.

Der vorliegenden Erfindung liegt deshalb die Aufgabe zugrunde eine Mediendurchführeinrichtung und eine zugehörige Schwenkeinheit bereitzustellen, bei welchen der Leitungsaufwand reduziert ist.

Diese Aufgabe wird von einer Mediendurchführeinrichtung der eingangs beschriebenen Art erfindungsgemäß dadurch gelöst, dass die Mediendurchführeinrichtung wenigstens ein Ventil, Druckleitungen und einen Fluidanschluss umfasst, wobei die der Drehdurchführeinrichtung abgewandten Enden der Medienkanäle der Mediendurchführeinrichtung über das wenigstens eine Ventil und die Druckleitungen mit dem Fluidanschluss verbunden sind und dass Mittel zur Steuerung und/oder Regelung des wenigstens einen Ventils vorgesehen sind.

Eine derartige Mediendurchführeinrichtung hat den Vorteil, dass eine geringere Anzahl von Fluidanschlüssen vorzusehen ist, wie Effektoren zu bewegen sind. Vorteilhafterweise kann die erfindungsgemäße Mediendurchführeinrichtung auch bei Vorhandensein von mehreren Effektoren mit lediglich einem Fluidanschluss auskommen. Dieser Fluidanschluss ist über die entsprechenden Druckkanäle mit dem wenigstens einen Ventil verbunden. Vorteilhafterweise sind entsprechend der Anzahl der Effektoren entsprechend viele Ventile vorgesehen, die über die Medienkanäle mit den Effektoren verbunden sind. Die Ventile werden von den Mitteln zur Steuerung und/oder Regelung der Ventile angesteuert. Durch eine derartige Ansteuerung werden die Medienkanäle gezielt mit dem Fluid beaufschlagt und die Effektoren bewegt.

Erfindungsgemäß ist demnach für jede Mediendurchführeinrichtung bzw. für jede Schwenkeinheit vorzugsweise lediglich eine Druckleitung erforderlich, die von dem Druckspeicher zu der Mediendurchführeinrichtung führt.

Vorteilhafterweise kann vorgesehen sein, dass die Mittel zur Steuerung und/oder Regelung des wenigstens einen Ventils insbesondere elektrisch ansteuerbare Vor- oder Pilotventile umfassen. Derartige Vor- oder Pilotventile haben den Vorteil, dass sie mit einer relativ geringen Leistungsaufnahme die eigentlichen Ventile schalten.

Eine weitere vorteilhafte Ausgestaltung der Erfindung kennzeichnet sich dadurch, dass die Mediendurchführeinrichtung eine der Anzahl der Medienkanalpaare entsprechende Anzahl von Ventilen vorsieht, wobei je ein Medienkanalpaar über ein Ventil mit dem fluiden Medium beaufschlagbar ist. Hierdurch kann jeder einem Medienkanalpaar zugeordneter Effektor unabhängig von anderen Effektoren bewegt werden, wobei insgesamt lediglich ein Fluidanschluss ausreichend ist.

Vorteilhafterweise ist je einem Ventil ein Ablasskanal zugeordnet, der an seiner Austrittsöffnung vorzugsweise ein Schalldämpferelement aufweist. Hierdurch wird eine wesentliche Reduzierung der Betriebsgeräusche der Mediendurchführeinrichtung und der Schwenkeinheit erreicht.

Bei einer weiteren vorteilhaften Ausgestaltung der Erfindung weist die Mediendurchführeinrichtung eine Schnittstelle für einen elektrischen Anschluss, insbesondere für eine Datensammelschiene bzw. für ein Bussystem auf, wobei die Schnittstelle elektrisch mit den Mitteln zur
Steuerung und/oder Regelung des wenigstens einen Ventils verbunden ist. Hierdurch wird erreicht, dass mit lediglich einer elektrischen Leitung eine Steuerung und/oder Regelung der Schwenkeinheit erreicht werden kann. Eine vorteilhafte Ausführungsform der Erfindung sieht demnach vor, dass die Mediendurchführeinrichtung der Schwenkeinheit lediglich zwei Anschlüsse aufweist, nämlich einen Fluidanschluss und einen elektrischen Anschluss.

Bei einer Weiterbildung der Erfindung ist vorgesehen, dass die Mediendurchführeinrichtung bzw. auch die Drehdurchführeinrichtung Leitungen zur Durchführung von elektrischen Signalen aufweist, die mit der Schnittstelle bzw. mit den Mitteln zur Steuerung und/oder Regelung des wenigstens einen Ventils verbunden sind. Durch derartige Leitungen können beispielsweise elektrische Signale von an den Effektoren vorhandenen Sensoren zu den Mitteln zur Steuerung und/oder Regelung geleitet werden. Die elektrischen Signale können ausgewertet und verwertet werden.

Die eingangs genannte Aufgabe wird außerdem durch eine Schwenkeinheit mit einer im Vorhergehenden beschriebenen Mediendurchführeinrichtung gelöst.

Weiterhin wird die eingangs genannte Aufgabe durch ein Modul für eine Schwenkeinheit gelöst, das die Mediendurchführeinrichtung mit den Medienkanälen, das wenigstens eine Ventil, den vorzugsweise lediglich einen Fluidanschluss, die Mittel zur Steuerung und/oder Regelung des Ventils und die Schnittstelle umfasst. Ein derartiges Modul baut sehr kompakt und ist vorteilhafterweise lös- und austauschbar an dem Gehäuseteil anordenbar.

Weitere vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

Es zeigen:
- Fig. 1:: eine Schwenkeinheit gemäß dem bekannten Stand der Technik;
- Fig. 2:: eine schematische Darstellung einer erfindungsgemäßen Schwenkeinheit im Schnitt;
- Fig. 3:: die perspektivische Ansicht einer erfindungsgemäßen Schwenkeinheit; und
- Fig. 4:: die Schwenkeinheit gemäß Fig. 3 in Explosionsdarstellung.

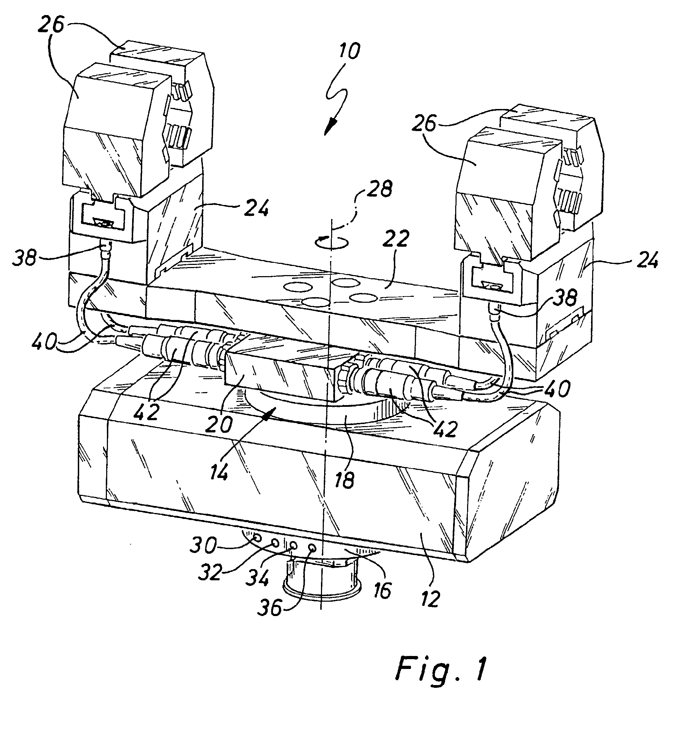

Fig. 1 zeigt eine bekannte Schwenkeinheit 10, die ein Gehäuseteil 12, eine Drehdurchführeinrichtung 14 und eine an dem Gehäuseteil 12 drehfest angeordnete Mediendurchführeinrichtung 16 umfasst. Die Drehdurchführeinrichtung 14 weist eine Flanschplatte 18 sowie sich einer von dieser Flanschplatte 18 durch das Gehäuseteil 12 erstreckende, in der Fig. 1 nicht dargestellte, Welle auf. Auf der der Flanschplatte 18 abgewandten Seite ist an dem Gehäuseteil 12 die das freie Ende der nicht dargestellten Welle der Drehdurchführeinrichtung 14 aufnehmende Mediendurchführeinrichtung 16 drehfest an dem Gehäuseteil 12 angeordnet.

Auf der Flanschplatte 18 ist eine Verteilerplatte 20 angeordnet, auf der eine Adapterplatte 22 angeflanscht ist. An den beiden freien Enden der Adapterplatte 22 ist jeweils ein Effektor in Form eines Greifers 24 mit je zwei Greifbacken 26 angeordnet. Die Drehdurchführung 14 mit der Verteilerplatte 20, der Adapterplatte 22, den Backenhalterungen 24 sowie den Greiferbacken 26 ist um eine mit der Bezugszahl 28 gekennzeichneten Schwenkachse verschwenkbar. Die Schwenkung erfolgt hierbei über einen in dem Gehäuseteil 12 angeordneten, in Fig. 1 nicht dargestellten Schwenkantrieb.

Die Backen 26 der jeweiligen Backenpaare können pneumatisch aufeinander zu und voneinander weg bewegt werden. Hierzu sind in den Greifern 24 Pneumatikzylinder mit entsprechenden Getrieben vorgesehen. Um die Pneumatikzylinder mit einem entsprechenden Medium zu versorgen, erstreckt sich von jeder Backenhalterung 24 je ein Medienkanalpaar durch die Adapterplatte 22, die Verteilerplatte 20 sowie durch die Drehdurchführeinrichtung 14 und die Mediendurchführeinrichtung 16. Die insgesamt vier Kanäle weisen an der Mediendurchführeinrichtung 16 vier Kanalöffnungen 30, 32, 34 und 36 auf. Diese Öffnungen 30, 32, 34 und 36 werden mit Fluidleitungen, insbesondere mit Druckluftschläuchen, verbunden. Durch Beaufschlagen des entsprechenden Kanals mit einen fluiden Medien wird eine entsprechende Bewegung der Greiferbacken 26 erreicht.

Fig. 1 zeigt weiterhin an die Backenhalterung 24 angeordnete Näherungssensoren 38, welche über Kabel 40 und Steckerelementen 42 mit in der Verteilerplatte 20 vorhandenen elektrischen Leitungen verbunden sind. Die nicht dargestellten Leitungen erstrecken sich durch die vorzugsweise hohl ausgebildete Welle der Drehdurchführeinrichtung 14 und sind an eine nicht dargestellte Regel- und/oder Steuereinheit angeschlossen.

Bei der in Fig. 1 dargestellten Ausführungsform sind lediglich zwei Medienkanalpaare mit den Öffnungen 30, 32 und 34, 36 - ein Kanalpaar für jeden Greifer - vorhanden. Bei anderen Ausführungsformen können weitere Medienkanäle für weitere auf der Adapterplatte anordenbare Effektoren vorhanden sein.

Nachteil der bekannten Schwenkeinheiten ist, dass bei zunehmender Anzahl von mit fluiden Medien zu versorgenden Effektoren die Anzahl der an die Mediendurchführeinrichtung 16 anzuschließenden Fluidleitungen zunimmt und die Mediendurchführeinrichtung größer oder länger baut.

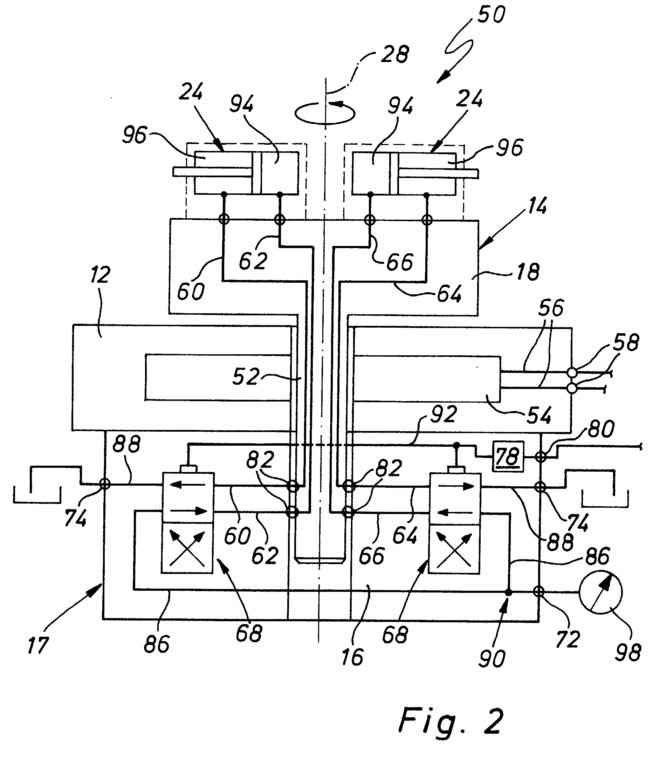

In der Fig. 2, die eine Schwenkeinheit 50 mit einer erfindungsgemäßen Mediendurchführeinrichtung 16 darstellt, sind der Schwenkeinheit 10 gemäß Fig. 1 entsprechende Teile mit entsprechenden Bezugszahlen versehen.

Die Fig. 2 zeigt, dass die Welle 52 der Drehdurchführeinrichtung 14 das Gehäuseteil 12 durchgreift. Zum Verschwenken der Drehdurchführeinrichtung 14 ist in dem Gehäuseteil 12 eine Antriebseinheit 54 angeordnet. Als Antriebseinheit 54 sind pneumatisch bewegbare Zahnstangen bekannt, die ein auf der Welle 52 angeordnetes Ritzel kämmen. Zur Versorgung der Antriebseinheit 54 sind in dem Gehäuseteil 12 Leitungen 56 vorgesehen, die in Kommunikationsmitteln 58 enden.

Das freie Ende der Welle 52 wird von der Mediendurchführeinrichtung 16 aufgenommen, die an dem Gehäuseteil 12 drehfest angeordnet ist.

Im Gegensatz zu der Schwenkeinheit 10 gemäß Fig. 1 sind bei der Darstellung gemäß Fig. 2 Medienkanäle 60, 62, 64 und 66 dargestellt. Jeweils ein Medienkanalpaar 60, 62 bzw. 64, 66 erstreckt sich von jeweils einem Effektor 24, 26 durch die Drehdurchführeinrichtung 14 zu der Mediendurchführeinrichtung 16.

Die Mediendurchführeinrichtung 16 gemäß Fig. 2 ist als Modul 17 ausgebildet, das neben Medienkanälen 60, 62, 64, 66 zwei ansteuerbare Ventile 68, zwei Druckleitungen 86, einen zentralen Fluidanschluss 72, zwei Fluidablässe 74, eine Steuer- und/oder Regeleinrichtung 78 sowie eine Schnittstelle 80 umfasst.

Die Kanäle 60, 62, 64 und 66 der verschwenkbaren Welle 52 sind mit bekannten Kommunikationsmitteln 82 mit den entsprechenden Kanälen 60, 62, 64, 66 der nicht drehbar angeordneten Mediendurchführeinrichtung 16 verbunden. Die den Kommunikationsmitteln 82 abgewandten Enden der innerhalb der Mediendurchführeinrichtungen 16 verlaufenden Kanalpaare 60, 62 und 64, 66 sind mit jeweils einem Ventil 68 verbunden. Auf den Kanalpaaren 60, 62 und 64, 66 abgewandten Seite weist jedes Ventil 68 einen mit dem einen Fluidanschluss 72 kommunizierenden Druckkanal 86 und je einen zu den Fluidablässen 74 führenden Ablasskanal 88 auf. Da die beiden Druckkanäle 86 an der Verzweigung 90 zusammengeführt werden, weist die Mediendurchführeinrichtung 16 lediglich einen Fluidanschluss 72 auf, der über eine Fluidleitung, insbesondere einem Druckluftschlauch, mit einem Fluidspeicher 90 verbunden ist.

Im Gegensatz zu dem bekannten Stand der Technik wird erfindungsgemäß lediglich ein Fluidanschluss 72 benötigt, um zwei oder auch mehr Effektoren 24 zu bewegen.

Die beiden Ventile 68 werden über Leitungen 92 von der Steuer- und/oder Regeleinrichtung 78 angesteuert. Die Steuer- und/oder Regeleinrichtung 78 ist ferner mit der Schnittstelle 80 verbunden, über welche die Steuerund/oder Regeleinrichtung 78 Signale empfängt bzw. versendet. Weiterhin kann die Steuer- und/oder Regeleinrichtung 78 über nicht dargestellte Leitungen mit an den Effektoren 24 vorhandenen Sensoren, die in Fig. 1 mit 38 gekennzeichnet sind, verbunden sein. Diese Leitungen verlaufen vorteilhafterweise innerhalb der hohl ausgebildeten Welle 52. Von den Sensoren erfasste Daten können somit der Steuer- und/oder Regeleinrichtung 78 mitgeteilt und von dieser entsprechend verarbeitet werden.

Entscheidender Vorteil der in Fig. 2 beschriebenen erfindungsgemäßen Schwenkeinheit 50 gegenüber der aus Fig. 1 bekannten Schwenkeinheiten 10 ist, dass die Schwenkeinheit 50 bzw. die Mediendurchführeinrichtung 16 lediglich einen Fluidanschluss 72 zur Bewegung von zwei oder mehr Effektoren 24 benötigt.

Bei der in Fig. 2 dargestellten Ventilstellung der Ventile 68 werden die Druckräume 94 der Effektoren 24 mit entsprechendem Druck beaufschlagt. Das in den Druckräumen 96 vorhandene Medium wird über die Medienkanäle 60 und 64, die Ventile 68 und die Kanäle 88 den Fluidablässen 74 zugeführt.

Bei der anderen, in Fig. 2 nicht dargestellten Ventilstellung werden die Druckräume 96 mit Druck beaufschlagt, und die in den Druckräumen 94 vorhandenen Medien werden entsprechend über die Fluidablässe 74 abgelassen.

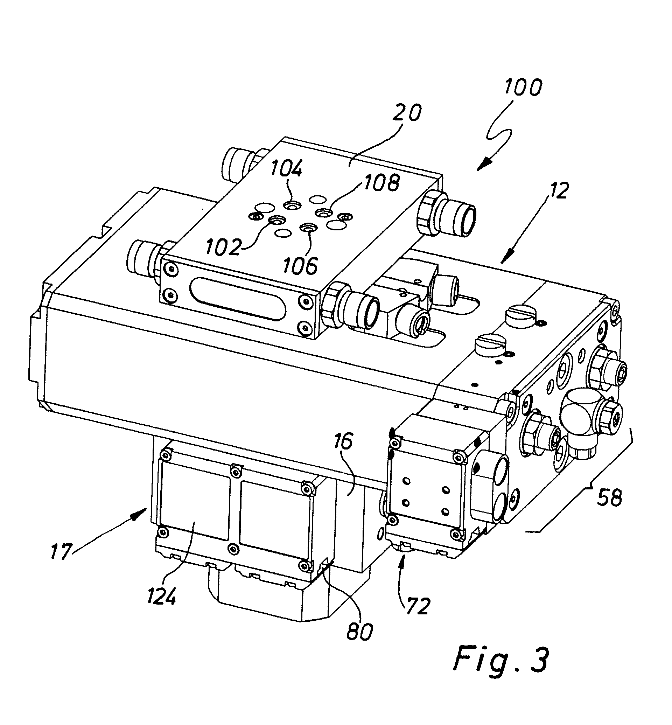

Bei der in Fig. 3 dargestellten erfindungsgemäßen Schwenkeinheit 100 sind der Ausführungsform nach Figur 2 entsprechende Bauteile mit entsprechenden Bezugszahlen versehen. Deutlich zu erkennen ist die auf der Drehdurchführeinrichtung 16 angeordnete Verteilerplatte 20. Die Verteilerplatte 20 weist an ihrer Oberseite vier Öffnungen 102, 104, 106, 108 der die Schwenkeinheit 100 durchsetzenden Medienkanäle 60, 62, 64, 66 auf.

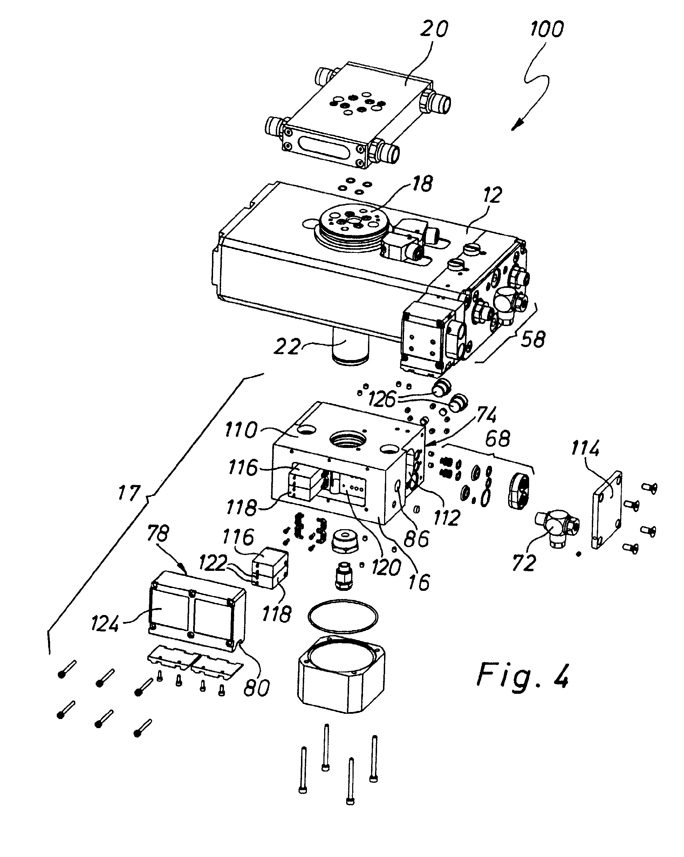

Der in Fig. 4 deutlich zu erkennende Fluidanschluss 72 der Mediendurchführeinrichtung 16 ist in seinem montierten Zustand an dem freien Ende des Druckkanals 86 angeordnet. Sowohl der Druckkanal 86 als auch die Kanäle 88 und die mediendurchführeinrichtungsseitigen Medienkanäle 60, 62 und 64, 66 verlaufen in einem Gehäuseblock 110 der Mediendurchführeinrichtung 16 bzw. des Moduls 17.

Die Fig. 4 zeigt ferner verschiedene Einzelteile eines Ventils 68, das zur Montage in eine Ventilaufnahme 112 des Gehäuseblocks 110 eingesetzt wird. Ein entsprechendes Ventil 68 wird in eine der Ventilaufnahme 112 gegenüberliegende Ventilaufnahme eingesetzt. Die montierten Ventile 68 werden von einer Abdeckplatte 114 abgedeckt. Die beiden Ventile 68 werden bei der in den Fig. 3 und 4 dargestellten Ausführungsform der Erfindung jeweils von zwei Pilotventilen 116 und 118 angesteuert. Die Pilotventile 116, 118 werden platzsparend in eine Ventilaufnahme 120 des Gehäuseblocks 110 eingesetzt. Auf der dem Betrachter zugewandten Stirnseite weisen die Pilotventile 116, 118 elektrische Anschlussmittel 122 auf, die mit einer den Anschlussmitteln 122 zugewandten, in einer Abdeckkappe 124 angeordneten Steuer- und/oder Regeleinheit 78 im montierten Zustand der Abdeckkappe 124 verbunden sind. Die Pilotventile 116, 118 werden von der Steuer- und/oder Regeleinrichtung 78 angesteuert, wobei die Pilotventile 116, 118 ihrerseits das entsprechende Ventil 68 ansteuern.

Die Abdeckkappe 124 weist auf ihrer Unterseite die Schnittstelle 80 auf, die zur Aufnahme eines elektrischen Kabels vorgesehen ist. Die Schnittstelle 80 ist mit der Steuer- und/oder Regeleinrichtung 78 elektrisch verbunden. Vorteilhafterweise ist die Schnittstelle 80 für einen elektrischen Anschluss einer Datensammelschiene bzw. eines Bussystems ausgeführt.

Auf der den Pilotventilen 116, 118 gegenüberliegenden Seite sind an den Gehäuseblock 110 die Fluidablässe 74 mit Schalldämpfer 126 angeordnet.

Wie aus insbesondere Fig. 4 deutlich wird, weist die modulartige Mediendurchführeinrichtung 16 einen Gehäuseblock 110 mit den Medienkanälen, die beiden Ventile 68, lediglich einen Fluidanschluss 72, die Steuer- und/oder Regeleinrichtung 78 sowie die Schnittstelle 80 auf. Vorteilhafterweise ist das Modul 17 lösbar an dem Gehäuseteil 12 der Schwenkeinheit 100 angeordnet.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Mediendurchführeinrichtung (16) für eine Schwenkeinheit (50, 100) mit einer eine Welle (52) umfassenden Drehdurchführeinrichtung (14) für fluide Medien und mit einem die Welle (52) verschwenkbar aufnehmenden Gehäuseteil (12), wobei die Mediendurchführeinrichtung (16) Medienkanäle (60, 62, 64, 66) aufweist, deren einen Enden zur Kommunikation mit in der Welle (52) verlaufenden Medienkanälen (60, 62, 64, 66) vorgesehen sind, **dadurch gekennzeichnet, dass** die Mediendurchführeinrichtung (16) wenigstens ein Ventil (68), Druckleitungen (86) und einen Fluidanschluss (72) umfasst, wobei die anderen Enden der Medienkanäle (60, 62, 64, 66) der Mediendurchführeinrichtung (16) über das wenigstens eine Ventil (68) und die Druckleitungen (86) mit dem Fluidanschluss (72) verbindbar sind und dass Mittel (78, 116, 118) zur Steuerung und/oder Regelung des wenigstens einen Ventils (68) vorgesehen sind.

2. Mediendurchführeinrichtung (16) nach Anspruch 1, **dadurch gekennzeichnet, dass** die Mittel (78) zur Steuerung und/oder Regelung des Ventils (68) insbesondere elektrisch angesteuerbare Vor- oder Pilotventile (116, 118) umfassen.

3. Mediendurchführeinrichtung (16) nach Anspruch 1 oder 2, **dadurch gekennzeichnet, dass** die Mediendurchführeinrichtung (16) eine der Anzahl von Medienkanalpaaren (60, 62 und 64, 66) entsprechende Anzahl von Ventilen (68) vorsieht, wobei je ein Medienkanalpaar (60, 62 und 64, 66) über ein Ventil (68) mit dem fluiden Medium beaufschlagbar ist.

4. Mediendurchführeinrichtung (16) nach Anspruch 3, **dadurch gekennzeichnet, dass** dem wenigstens einen Ventil (68) ein Ablasskanal (88) zugeordnet ist, der an seiner Austrittsöffnung (74) vorzugsweise ein Schalldämpferelement (126) aufweist.

5. Mediendurchführeinrichtung (16) nach einem der vorhergehenden Ansprüche, **dadurch gekennzeichnet, dass** die Mediendurchführeinrichtung (16) eine Schnittstelle (80) für einen elektrischen Anschluss, insbesondere für eine Datensammelschiene bzw. für ein Bussystem, aufweist, wobei die Schnittstelle (80) elektrisch mit den Mitteln (78) zur Steuerung und/oder Regelung des wenigstens einen Ventils (68) verbunden ist.

6. Mediendurchführeinrichtung (16) nach einem der vorhergehenden Ansprüche, **dadurch gekennzeichnet, dass** die Mediendurchführeinrichtung (16) und/oder die Drehdurchführeinrichtung (14) Leitungen zur Durchführung von elektrischen Signalen aufweist, die mit der Schnittstelle (80) bzw. mit den Mitteln (78) zur Steuerung und/oder Regelung des wenigstens einen Ventils (68) verbunden sind.

7. Modul (17) umfassend eine Mediendurchführeinrichtung nach einem der vorhergehenden Ansprüche (16), das wenigstens eine Ventil (68), den Fluidanschluss (72), die Mittel (78, 116, 118) zur Steuerung und/oder Regelung des Ventils (68) und die Schnittstelle (80).

8. Modul (17) nach Anspruch 7, **dadurch gekennzeichnet, dass** das Modul (17) lösbar an dem Gehäuseteil (12) anordenbar ist.

9. Schwenkeinheit (50, 100) mit einer Mediendurchführeinrichtung (16) nach einem der Ansprüche 1 bis 6 oder einem Modul (17) nach Anspruch 7 oder 8.
